# EUROPEAN PATENT APPLICATION

(11) **EP 2 690 903 A1**
(43) Date of publication of application: **29.01.2014**
(21) Application number: 11861423.9
(22) Date of filing: 22.03.2011
(51) Int. Cl.: H04W 24/10

(54) **MOBILE COMMUNICATION SYSTEM, MOBILE STATION, BASE STATION, AND COMMUNICATION METHOD**

(71) Applicant: Fujitsu Limited, Kawasaki-shi, Kanagawa 211-8588 (JP)
(72) Inventor: TSUTSUI, Masafumi, Kawasaki-shi, Kanagawa 211-8588 (JP); SEKI, Hiroyuki, Kawasaki-shi, Kanagawa 211-8588 (JP)
(74) Representative: Schultes, Stephan
(86) International application number: PCT/JP2011/056856
(87) International publication number: WO 2012/127638

(57) **Abstract**

A mobile communication system includes a base station (10) and a mobile station (20). The base station (10) receives a report on a channel state from the mobile station (20). The base station (10) includes a receiving unit (13) and a sending unit (12). The receiving unit (13) receives a trigger for the report on the channel state sent from the mobile station (20). In response to the received trigger, the sending unit (12) sends, to the mobile station (20), allocation information on the radio resource used for the report on the channel state. The mobile station (20) reports the channel state to the base station. The mobile station (20) includes a sending unit (25) and a receiving unit (21). The sending unit (25) sends, to the base station (10), a trigger for a report on the channel state. The receiving unit (21) receives the allocation information sent in response to the reception of the trigger from the base station (10). The sending unit (25) sends, to the base station (10), information on the channel state based on the allocation information.

## Description

### [Technical Field]

The embodiments discussed herein are directed to a mobile communication system, a mobile station, a base station, and a communication method.

### [Background Art]

In conventional mobile communication systems in which mobile stations exchange signals with base stations, each of the base stations simultaneously performs multiple access with multiple mobile stations. When doing so, each of the base stations performs the schedulissng of the multiple mobile stations such that data is efficiently transmitted. In terms of implementing high efficient data transmission, the scheduling is preferably performed when a signal level is high and based on the channel variation for each mobile station or based on the channel states between each of the base station and the multiple mobile stations. In particular, during downlink communication from the base station to the mobile station, the mobile communication system measures a channel quality indicator (CQI), which is the quality of a channel for each mobile station, and feeds back the measurement result to the base station, and thereby the base station performs the scheduling.

### [Citation List]

### [Patent Citation]

Patent Literature 1: Japanese Laid-open Patent Publication No. 2010-178334
Patent Literature 2: Japanese National Publication of International Patent Application No. 2010-514249
Patent Literature 3: Japanese National Publication of International Patent Application No. 2009-521890
Patent Literature 4: Japanese Laid-open Patent Publication No. 2008-211819

### [Summary of Invention]

### [Technical Problem]

However, with the technology described above, the CQI reporting from a mobile station to a base station is sometimes not efficiently performed. Specifically, the CQI reporting includes "periodic reporting", in which reporting is performed during a predetermined period, and "aperiodic reporting", in which reporting is performed as a response to a CQI_Request that is a request from the base station side. Because the former reporting, i.e., periodic reporting, is usually performed over a period of approximately tens to hundreds of milliseconds, the reporting may CQI reporting depending that is too late on the moving speed of the mobile station. In contrast, with the aperiodic reporting, if, for example, the channel environment of the mobile station is suddenly degraded, a base station is not able to immediately recognize the CQI, and thus it is not able to correctly receive a CQI value that has been sent from the mobile station. Nevertheless, there may possibly still be a situation in which the CQI value is continuously transmitted.

Furthermore, with the technology described above, when the base station receives an incorrect CQI value from the mobile station due to a sudden variation in the channel environment, data in the downlink direction may possibly be sent by using an inappropriate Modulation and Coding Scheme (MCS). In such a case, the mobile station is not able to correctly receive the data, which causes a reduction in the throughput of the mobile communication system or an increase in electrical power consumed by the mobile station. In other words, accurate CQI reporting to the base station performed by the mobile station is important in order to determine the MCS at the base station and, furthermore, in order to efficiently exchange data.

The present invention has been conceived in light of the circumstances described above, and an object thereof is to provide a mobile communication system, a mobile station, a base station, and a communication method, with which the base station can efficiently send data to a mobile station based on a report on the channel state received from the mobile station.

### [Solution to Problem]

To solve the problems and achieve the object as described above, in a mobile communication system of one embodiment disclosed in the present application, a mobile station reports a channel state to a base station. The mobile station includes a first receiving unit and a first sending unit. The first receiving unit receives allocation information on a radio resource used for a report on the channel state. The first sending unit sends, to the base station, a trigger for the report on the channel state and sends, to the base station, information on the channel state based on the allocation information. The base station includes a second receiving unit and a second sending unit. The second receiving unit receives the trigger sent from the mobile station. The second sending unit sends, in response to the received trigger, the allocation information to the mobile station.

### [Advantageous Effects of Invention]

According to an aspect of a mobile communication system disclosed in the present invention, an advantage is provided in that a base station can efficiently send data to a mobile station based on CQI reporting received from the mobile station.

### [Brief Description of Drawings]

FIG. 1 is a schematic diagram illustrating the configuration of a mobile communication system.
FIG. 2 is a schematic diagram illustrating the functional configuration of a base station and a mobile station.
FIG. 3 is a schematic diagram illustrating the hardware configuration of the base station.
FIG. 4 is a schematic diagram illustrating the hardware configuration of the mobile station.
FIG. 5 is a schematic diagram illustrating a signal exchanged between the base station and the mobile station when the mobile station is moving at high speed.
FIG. 6 is a schematic diagram illustrating a signal exchanged between the base station and the mobile station when the mobile station is moving at low speed.
FIG. 7 is a flowchart illustrating the flow of the operation of a base station according to a first embodiment.
FIG. 8 is a flowchart illustrating the flow of the operation of a mobile station according to the first embodiment.
FIG. 9 is a flowchart illustrating the flow of the operation of a base station according to a second embodiment.
FIG. 10 is a flowchart illustrating the flow of the operation of a mobile station according to the second embodiment.

### [Embodiments for Carrying Out the Invention]

Preferred embodiments of a mobile communication system, a mobile station, a base station, and a communication method disclosed in the present invention will be described in detail below with reference to the accompanying drawings. The mobile communication system, the mobile station, the base station, and the communication method disclosed in the present invention are not limited to the embodiments described below.

### [a] First Embodiment

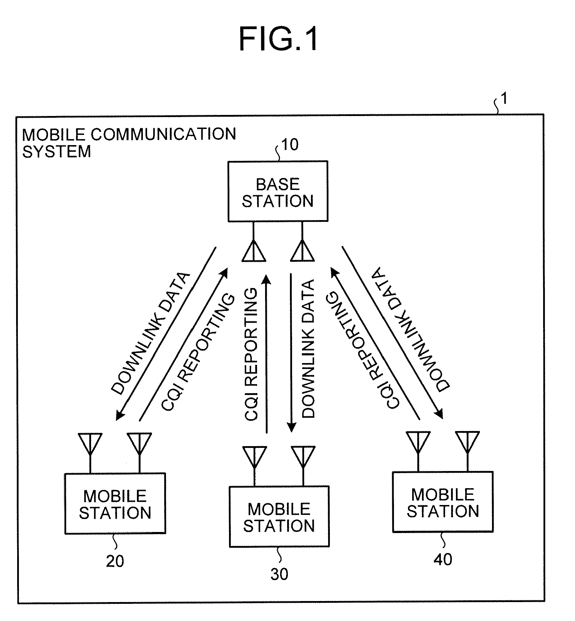

FIG. 1 is a schematic diagram illustrating the configuration of a mobile communication system 1. As illustrated in FIG. 1, the mobile communication system 1 includes a base station 10 and mobile stations 20, 30, and 40. The base station 10 is connected to multiple mobile stations 20, 30, and 40 such that the base station 10 can exchange various signals via radio channels. For example, if the mobile station 20 detects its own channel state, the mobile station 20 reports the channel state (CQI) to the base station 10. If the base station 10 receives this CQI reporting from the mobile station 20, the base station 10 requests an MCS that is suitable for the CQI and then sends data in the downlink direction (downlink data) to the mobile station 20 via a radio channel. For the mobile stations 30 and 40, similarly, the base station 10 sends downlink data in accordance with the CQI reporting received from the mobile stations 30 and 40.

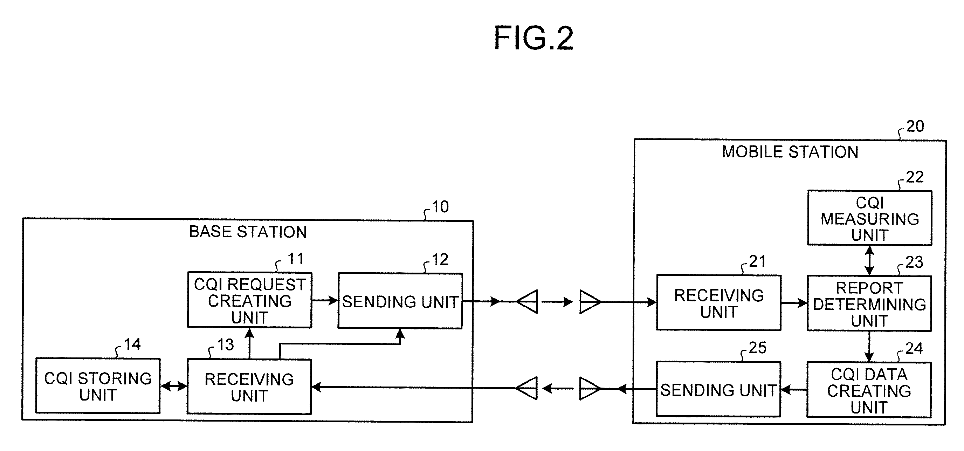

FIG. 2 is a schematic diagram illustrating the functional configuration of the base station 10 and the mobile station 20. As illustrated in FIG. 2, the base station 10 includes a CQI request creating unit 11, a sending unit 12, a receiving unit 13, and a CQI storing unit 14. Each of these units is connected such that a signal or data can be input and output in a one-way or two-way direction. The CQI request creating unit 11 creates a CQI_Request signal that is a signal for requesting the CQI reporting from the mobile station 20. If the sending unit 12 detects the receiving of the CQI_Recommend signal from the mobile station 20, the sending unit 12 sends back the CQI_Request signal to the mobile station 20. The receiving unit 13 receives, from the mobile station 20, the CQI_Recommend signal that is a trigger for allocating the radio resource and receives the CQI that has been requested by using the CQI_Request signal. The CQI storing unit 14 updates a CQI value associated with the mobile station 20 based on the CQI reporting received from the mobile station 20.

As illustrated in FIG. 2, the mobile station 20 includes a receiving unit 21, a CQI measuring unit 22, a report determining unit 23, a CQI data creating unit 24, and a sending unit 25. Each of these units is connected such that a signal or data can be input and output in a one-way or two-way direction. The receiving unit 21 receives a CQI_Request signal created by the base station 10. The CQI measuring unit 22 measures the quality of the radio channel between the base station 10 and the mobile station 20 based on the received radio wave intensity or an estimated value of the Signal to Interference Ratio (SIR).

When, as a trigger, the CQI_Request signal is received or the reporting period has elapsed, the report determining unit 23 determines whether the CQI reporting is requested and then instructs, based on the determination result, the CQI data creating unit 24 to create CQI data to be reported. The necessity of a request for the CQI reporting is determined, for example, depending on whether the CQI measured by the mobile station 20 decreases by a predetermined threshold or more. Specifically, the CQI measuring unit 22 monitors whether the CQI decreases by the predetermined threshold or more. If a decrease in the CQI is observed, the report determining unit 23 determines that the CQI reporting is to be performed. The CQI data creating unit 24 creates, based on the instruction from the report determining unit 23, CQI data that is to be sent to the mobile station 20. The sending unit 25 sends the CQI_Recommend signal to the base station 10 and also sends, to the mobile station 20, the CQI data by using the radio resource that is used for the mobile station 20 and that is allocated by using that signal as a trigger.

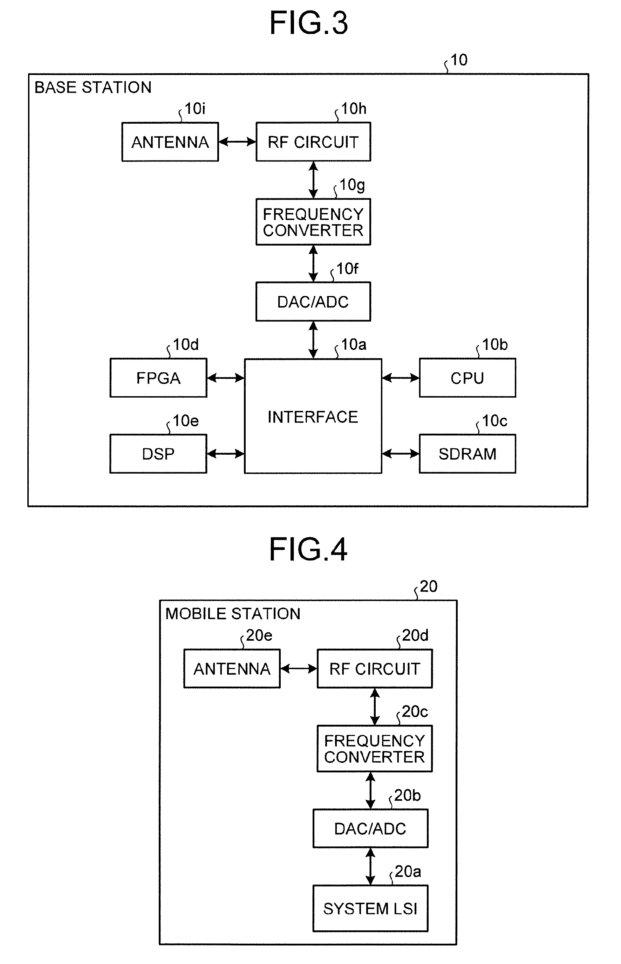

FIG. 3 is a schematic diagram illustrating the hardware configuration of the base station 10. As illustrated in FIG. 3, in the base station 10, a CPU 10b, an SDRAM 10c, a field programmable gate array (FPGA) 10d, and a digital signal processor (DSP) 10e are physically connected with each other via an interface 10a, such as a switch, such that various signals or data can be input and output. Furthermore, the base station 10 physically includes a digital-to-analog converter (DAC)/analog-to-digital converter (ADC) 10f, a frequency converter 10g, and a radio frequency (RF) circuit 10h. The RF circuit 10h includes an antenna 10i.

FIG. 4 is a schematic diagram illustrating the hardware configuration of the mobile station 20. As illustrated in FIG. 4, the mobile station 20 physically includes a system large scale integrated (LSI) CPU 20a, a DAC/ADC 20b, a frequency converter 20c, and an RF circuit 20d. The RF circuit 20d includes an antenna 20e.

In the following, the operation of the mobile communication system 1 according to the first embodiment will be described.

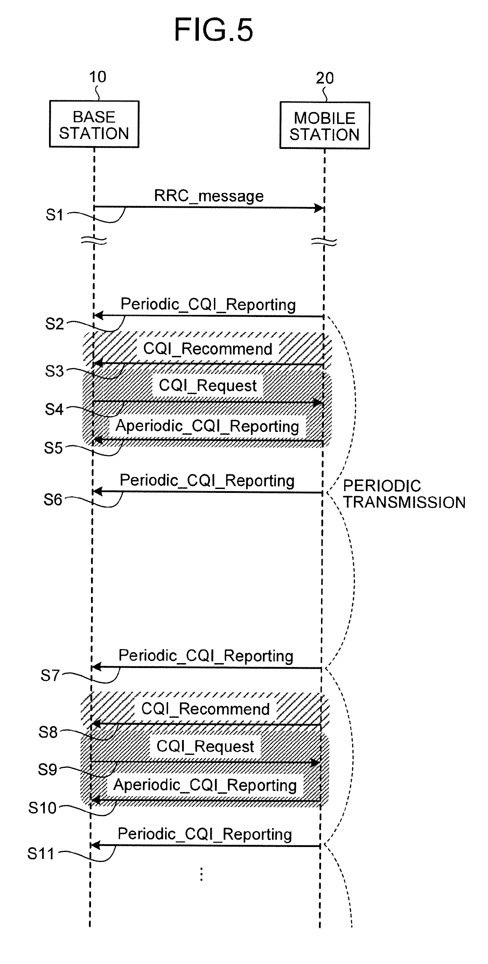

FIG. 5 is a schematic diagram illustrating a signal exchanged between the base station 10 and the mobile station 20 when the mobile station 20 is moving at high speed. As illustrated in FIG. 5, when the mobile station 20 is moving at high speed, the mobile station 20 performs the CQI reporting by using the periodic reporting and the aperiodic reporting in combination. The movement at high speed mentioned here is, for example, 30 km/h or more.

First, at Step S1, a radio resource control (RRC)_message signal is sent from the base station 10 to the mobile station 20. This RRC_message signal includes, for example, a code number as a parameter used by the mobile station 20 for periodically performing the CQI reporting.

At Step S2, a Periodic_CQI_Reporting signal is sent from the base station 10 to the mobile station 20 and periodic CQI reporting is performed. CQI values are sequentially reported during a period of approximately, for example, 30 to 340 ms. The periodic reporting (Periodic CQI) is performed by using a physical uplink control channel (PUCCH).

The mobile station 20 always monitors the channel state of the downlink from the base station 10 to the mobile station 20. When, as a trigger, the variation in the channel state exceeds the predetermined threshold, the mobile station 20 sends a CQI_Recommend signal to the base station 10 (Step S3). Consequently, the mobile station 20 provides the base station 10 with a trigger for the CQI reporting and then requests the resource to be allocated for the CQI reporting. If the base station 10 receives the CQI_Recommend signal, the base station 10 sends, as a reply, a CQI_Request signal to the mobile station 20 that is the transmission source (Step S4). In the CQI_Request signal, the resource that can be allocated to the mobile station 20, i.e., the destination, is specified. The mobile station 20 uses the specified resource to perform the CQI reporting to the base station 10 with an Aperiodic_CQI_Reporting signal (Step S5). Specifically, the function of the CQI_Recommend signal here is to prompt the aperiodic CQI reporting.

After that, when the mobile station 20 is moving at high speed, the CQI is periodically reported after the aperiodic reporting has ended (Steps S6, S7, and S11). Furthermore, for the aperiodic reporting, in accordance with the variation in the channel state, the same processes as those performed at Steps S3 to S5 are performed (Steps S8 to S10). The aperiodic reporting (aperiodic CQI) is performed by using a physical uplink shared channel (PUSCH).

Because the channel variation is great when the mobile station 20 is moving at high speed, the CQI reporting is preferably performed as short a period as possible. However, because the mobile communication system 1 is not able to keep up with the channel variation that varies in a shorter period than the reporting period unless the aperiodic reporting is performed, immediately reporting a CQI by using the CQI_Recommend signal that is triggered by the channel variation is an effective way of reporting.

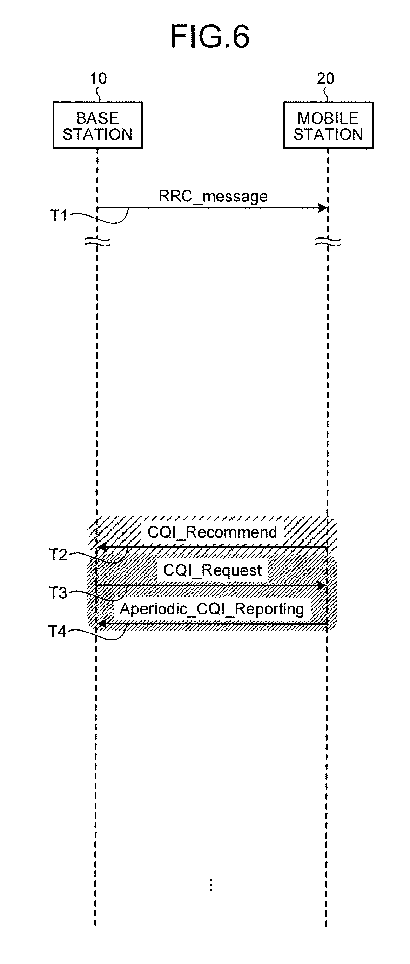

FIG. 6 is a schematic diagram illustrating a signal exchanged between the base station 10 and the mobile station 20 when the mobile station 20 is moving at low speed. As illustrated in FIG. 6, in the first embodiment, when the mobile station 20 is moving at low speed, the mobile station 20 does not perform the periodic reporting but performs only the aperiodic reporting of the CQI. The movement at low speed mentioned here is, for example, about 4 km/h.

At T1, similarly to when moving at high speed, an RRC_message signal is sent from the base station 10 to the mobile station 20. The RRC_message signal includes the parameter used by the mobile station 20 for periodically performing the CQI reporting. However, in the first embodiment, because the periodic reporting from the mobile station 20 to the base station 10 is not performed when the mobile station 20 is moving at low speed, the process performed at Step T1 may also be omitted.

If the mobile station 20 detects the actual channel variation in the downlink direction, aperiodic CQI reporting is performed. Specifically, the mobile station 20 always monitors the channel state of the downlink from the base station 10 to the mobile station 20. When, as a trigger, the channel state varies, the mobile station 20 sends a CQI_Recommend signal to the base station 10 (Step T2). Consequently, the mobile station 20 prompts the base station 10 to perform aperiodic CQI reporting. When, as a trigger, the base station 10 receives the CQI_Recommend signal, the base station 10 sends, as a reply, a CQI_Request signal to the mobile station 20, which is the transmission source (Step T3). Because the resource that can be used by the mobile station 20, i.e., the destination, is specified in the CQI_Request signal, the mobile station 20 acquires the resource used for the CQI reporting by receiving the CQI_Request signal. By using this resource, the mobile station 20 performs the CQI reporting to the base station 10 with an Aperiodic_CQI_Reporting signal (Step T4).

Specifically, the mobile station 20 includes the report determining unit 23 that determines, based on the moving speed of the mobile station 20, whether the channel state is periodically reported to the base station 10. The report determining unit 23 periodically reports the channel state to the base station 10 only when the moving speed of the mobile station 20 is equal to or greater than a predetermined speed. The predetermined speed used here may be a value effective as a threshold between the high speed and low speed of the movement of the mobile station 20 and is, for example, about 30 km/h. Furthermore, the base station 10 determines whether the mobile station 20 is moving at high speed or at low speed based on, for example, the magnitude of the level of the Doppler frequency shift.

In a movement at low speed, the channel variation is gentle; therefore, the mobile station 20 sufficiently keeps up with the channel variation by performing the CQI reporting only when the CQI value actually varies. In the first embodiment, in a movement at low speed, the mobile station 20 performs the aperiodic reporting of the CQI and does not perform the periodic reporting; however, the periodic reporting may also be, of course, performed. Furthermore, for the periodic reporting, a variable setting is possible regardless of whether movement is at low speed or high speed. By setting a long period (for example, 300 ms), a base station can accommodate a greater number of mobile stations even if many mobile stations are concentrated in a small area, such as an event venue.

As described above, the mobile station 20 monitors the channel state regardless of whether its movement is at low speed or high speed and, when the channel state varies, sends a CQI_Recommend to the base station 10. Consequently, it is possible to implement the CQI reporting that is aperiodically performed and that is lead by a mobile station. Therefore, it is possible to simultaneously solve the problem of, in the periodic CQI reporting, late reporting depending on the moving speed of the mobile station and the problem of, in the aperiodic CQI reporting, the variation in the channel state of a mobile station not being considered because the reporting is lead by the base station (network side). Consequently, the base station can determine an MCS based on the latest and accurate CQI reporting performed by the mobile station, which makes it possible for the base station to efficiently transmit data to a mobile station with only a little delay.

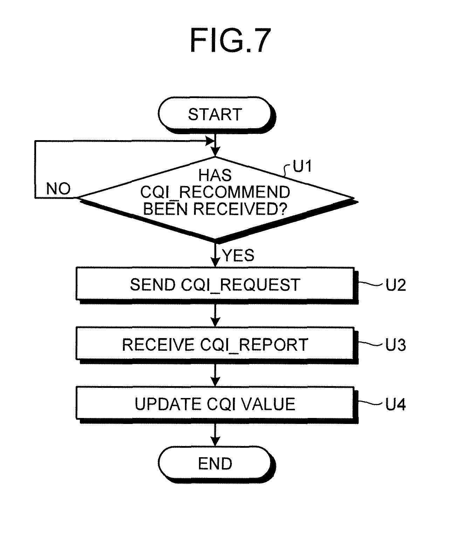

FIG. 7 is a flowchart illustrating the flow of the operation of the base station 10 according to a first embodiment. As illustrated in FIG. 7, at Step U1, the base station 10 waits for a CQI_Recommend signal to be received. If the base station 10 receives the signal by using the receiving unit 13 (Yes at Step U1), by using this as a trigger, the base station 10 creates a CQI_Request signal that is information (allocation information) for allocating the radio resource to the mobile station 20, i.e., the transmission source. This creating process is performed by the CQI request creating unit 11. The base station 10 sends the created CQI_Request signal as a reply by using the sending unit 12 (Step U2). The base station 10 waits for a CQI_Report signal to be sent from the mobile station 20 that has received the CQI_Request signal and then receives, by using the receiving unit 13, the CQI_Report signal as the CQI reporting from the mobile station 20 (Step U3). The base station 10 updates the CQI value of the mobile station 20 stored in the CQI storing unit 14 to the latest value based on the CQI_Report signal received at Step U3 (Step U4). At Step U1, if the CQI_Recommend signal is not received (No at Step U1), the base station 10 continues to wait for the signal to be received. Because the processes performed at Steps U1 to U4 are repeatedly performed, the base station 10 can always retain the latest CQI value related to the mobile station 20 in the CQI storing unit 14.

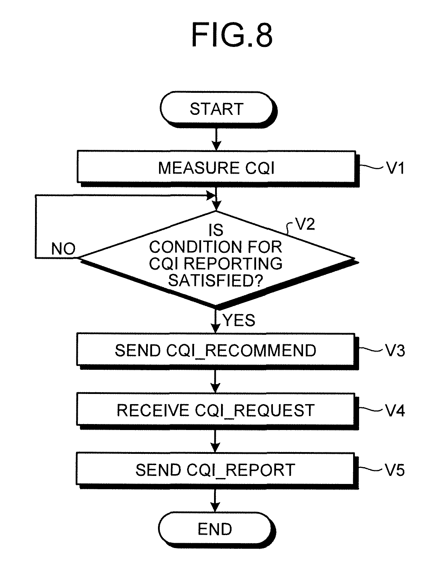

FIG. 8 is a flowchart illustrating the flow of the operation of the mobile station 20 according to the first embodiment. As illustrated in FIG. 8, at Step V1, by using the CQI measuring unit 22, the mobile station 20 measures its own CQI value with respect to the base station 10. This measurement is performed based on, for example, the radio wave intensity received from the base station 10 or an estimated value of the SIR. The mobile station 20 monitors, based on the history of the CQI by using the report determining unit 23, whether the condition for the CQI reporting is satisfied (Step V2). If the condition is satisfied (Yes at Step V2), the mobile station 20 sends a CQI_Recommend signal to the base station 10 in order to reserve the radio resource used for performing the CQI reporting (Step V3). This CQI_Recommend signal is sent by the sending unit 25. Then, the mobile station 20 waits for a CQI_Request signal to be sent from the base station 10 that has received the CQI_Recommend signal and receives, by using the receiving unit 21, the CQI_Request signal as allocation information on the resource allocated by the base station 10 (Step V4). Then, based on the CQI_Request signal received at Step V4, the mobile station 20 specifies the radio resource allocated to the mobile station 20 and sends, to the base station 10 by using the radio resource, a CQI_Report signal used for reporting the channel state (Step V5). The transmission of the CQI_Report signal is performed by the sending unit 25. At Step V2, if the condition of the CQI reporting is not satisfied (No at Step V2), the mobile station 20 continues to monitor the channel state. Because the processes performed at Steps V1 to V5 are repeatedly performed, the mobile station 20 can always reliably report the latest CQI value to the base station 10.

As described above, the mobile communication system 1 according to the first embodiment includes the base station 10 and the mobile station 20. In the mobile communication system 1, the mobile station 20 reports the channel state (CQI) by using the periodic radio resource allocated by the base station 10. The base station 10 includes the receiving unit 13 and the sending unit 12. The receiving unit 13 receives a trigger (CQI_Recommend) sent from the mobile station 20. In response to the received trigger, the sending unit 12 sends, in addition to the periodic radio resource, allocation information (CQI_Request) related to the radio resource used for reporting the channel state to the mobile station 20. The mobile station 20 includes the receiving unit 21 and the sending unit 25. The receiving unit 21 receives the allocation information related to the radio resource from the base station 10. The sending unit 25 sends, to the base station 10, the above trigger that is the report on the channel state and also sends information (CQI_Report) on the channel state based on the allocation information. Specifically, for the periodically performed report on the channel state, the sending unit 25 in the mobile station 20 does not send the above trigger to the base station 10 but sends the above trigger when it sends a report on a channel state instead of sending the above mentioned periodically performed reporting on the channel state.

Specifically, as in the conventional technology, there may be a case in which, if the mobile station 20 receives a CQI_Request from the base station 10 without the mobile station 20 sending a CQI_Recommend, it is not possible to flexibly cope with the significant variation in the channel state and thus unwanted CQI reporting is repeatedly performed. Accordingly, in the mobile communication system 1 according to the first embodiment, because the variation in the channel state is predicted to be great when the mobile station 20 is moving at high speed, the mobile station 20 performs the CQI reporting in a short period as much as possible by using the periodic reporting and the aperiodic reporting in combination. In contrast, when the mobile station 20 is moving at low speed, because the variation in the channel state is predicted to be small, the mobile station 20 does not perform the periodic reporting but performs the CQI reporting only when the channel state actually varies. In other words, by efficiently sending a CQI_Recommend, the mobile station 20 can immediately report a CQI when the channel state varies even if the mobile station 20 is moving at either speed, i.e., at high speed or low speed. By doing so, the mobile station 20 can reduce unwanted CQI reporting and thus implementing efficient CQI reporting with only a short delay. Consequently, it is possible to reduce the electrical power consumed by the mobile station 20 and the interference with respect to the other mobile stations 30 and 40. Furthermore, the base station 10 can also efficiently perform , based on the accurate CQI reporting from the mobile station 20, scheduling that takes into consideration the fading of the signal or the selectivity of the frequency.

### [b] Second Embodiment

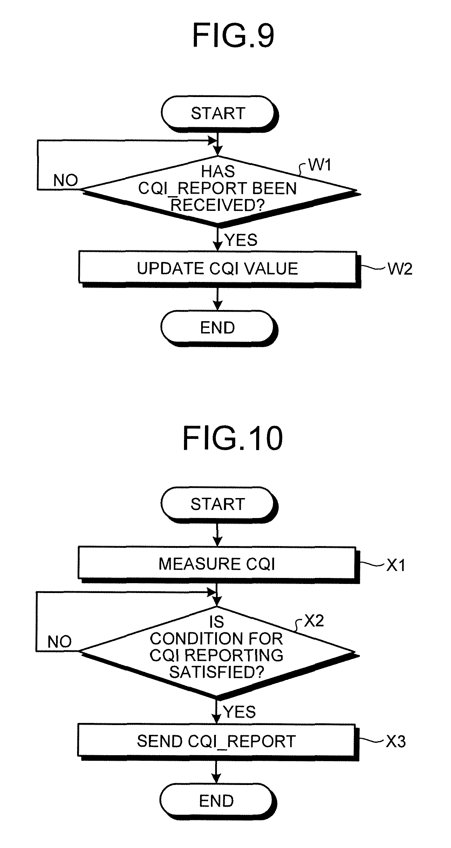

In the following, a second embodiment will be described. The configuration of a mobile communication system according to the second embodiment is the same as that of the mobile communication system according to the first embodiment illustrated in FIG. 1. Furthermore, the configurations of the base station and the mobile station according to the second embodiment are the same as those of the base station and the mobile station according to the first embodiment illustrated in FIG. 2. Accordingly, in the second embodiment, the same reference numerals used in the first embodiment are used in the second embodiment and detailed descriptions of components having the same reference numerals will be omitted. The second embodiment differs from the first embodiment in that a new radio resource for the CQI reporting is used. Specifically, in the first embodiment, the mobile station 20 separately send a CQI_Recommend signal and a CQI_Reporting signal, whereas, in the second embodiment, these signals are sent in combination to the base station 10. In the following, an explanation with reference to FIGS. 9 and 10 will be given that concentrates on the differences between the first process and the operation of the base station 10 and the mobile station 20 according to the second embodiment.

FIG. 9 is a flowchart illustrating the flow of the operation of the base station 10 according to a second embodiment. As illustrated in FIG. 9, at Step W1, the base station 10 waits for a CQI_Report signal to be sent from the mobile station 20. If the base station 10 receives the signal from the receiving unit 13 (Yes at Step W1), the base station 10 allows the CQI storing unit 14 to store the CQI value, which is indicated by the signal, as the CQI reporting of the mobile station 20. Consequently, the CQI value of the mobile station 20 is updated to the latest value (Step W2). Furthermore, at Step W1, during a period in which the CQI_Report signal is not received (No at Step W1), the base station 10 continues to wait for the signal to be received. Because the processes performed at Steps W1 and W2 are repeatedly performed by the base station 10, the base station 10 can always retain the latest CQI value related to the mobile station 20 in the CQI storing unit 14.

FIG. 10 is a flowchart illustrating the flow of the operation of a mobile station 20 according to the second embodiment. As illustrated in FIG. 10, at Step X1, the mobile station 20 measures, by using the CQI measuring unit 22, its own CQI value with respect to the base station 10. This measurement is performed based on, for example, the radio wave intensity received from the base station 10 or an estimated value of the SIR. The mobile station 20 monitors, based on the history of the CQI by using the report determining unit 23, whether the condition for the CQI reporting is satisfied (Step X2). If the condition is satisfied (Yes at Step X2), the mobile station 20 sends a CQI_Report signal to the base station 10 by using a dedicated radio resource that is allocated to the CQI reporting (Step X3). Because this signal includes identification information on the mobile station 20, the base station 10 easily identifies that the transmission source of the CQI reporting used by this signal is the mobile station 20. Furthermore, at Step X2, if the condition for the CQI reporting is not satisfied (No at Step X2), the mobile station 20 continues to be in the monitoring state. Because the processes performed at Steps X1 to X3 are repeatedly performed, the mobile station 20 can always reliably report the latest CQI value to the base station 10.

As described above, in the first embodiment, the mobile station 20 sends a signal once to the base station 10 in order to obtain allocation information on the radio resource. In contrast, with the mobile communication system 1 according to the second embodiment, by using the resource that is newly allocated for the CQI reporting, the mobile station 20 performs the CQI reporting in which a predetermined reporting condition is satisfied. Consequently, in the mobile communication system 1 according to the second embodiment, it is also possible to implement the CQI reporting lead by a mobile station; therefore, the same effect obtained in the first embodiment can be obtained.

If the radio resource dedicated to the CQI reporting is provided, it is conceivable that a channel may become a contention-based channel in which there is conflict between the signals of the multiple mobile stations. The conflict can be resolved by the mobile station 20 sending its own identification information together with a CQI value. Consequently, when the CQI reporting is performed, the base station 10 needs to obtain information for identifying a mobile station, which is the reporting source. This identification information can be included in a CQI_Recommend signal (the case in the first embodiment) or a CQI_Report signal (the case in the second embodiment). As described above, in the second embodiment, by simultaneously sending a CQI_Report signal and a mobile station identification signal, direct CQI reporting using a dedicated channel is implemented.

In the first and second embodiments, the channel variation is used to trigger the aperiodic reporting. Specifically, it is determined whether the aperiodic reporting is performed based on a CQI value measured by the mobile station 20. For the threshold for this CQI value, the same value may be used both in a case in which a CQI value is degraded and in a case in which a CQI value is improved; however, different values may also be used. For example, for the threshold, by setting a value that is used in a case of degradation in a CQI value to a value greater than a value that is used in a case of improvement in a CQI, the mobile station 20 can perform, with priority, the CQI reporting when a CQI value is degraded. Specifically, if the threshold used in a case of degradation in a CQI value is set to 50 and the threshold used in a case of improvement in a CQI value is set to 40, the mobile station 20 can perform, with priority, the CQI reporting if the CQI value is decreasing (for example 60). Furthermore, even if the same value is set to the thresholds, the mobile station 20 may also particularly perform, with priority, the CQI reporting when a CQI value is degraded when compared with a CQI value used in a case of improvement. For example, when the threshold for a CQI is set to 50, if the CQI value decreases and becomes less than 50, the mobile station 20 performs the CQI reporting. In contrast, if the CQI value increases and exceeds 50, it may be possible for the mobile station 20 not to perform the CQI reporting. The reason for this is that transmission of data from the base station 10 to the mobile station 20 is performed by using a Modulation and Coding Scheme (MCS) that is determined in accordance with a CQI value; however, if a channel is degraded, because an error tends to occur when data is exchanged by using the MCS, it is preferable to promptly update the CQI value to an accurate CQI value. In contrast, if a channel is being improved, although there is an excess of electrical power, an error is less likely to occur even if a report on the latest CQI value is delayed a little. As described above, the mobile station 20 appropriately changes the timing at which a CQI value is reported in accordance with an increase or a decrease in the CQI value. Consequently, it is possible to efficiently and reliably exchange data.

### [Explanation of Reference]

- 1: mobile communication system
- 10: base station
- 11: CQI request creating unit
- 12: sending unit
- 13: receiving unit
- 14: CQI storing unit
- 10a: interface
- 10b: CPU
- 10c: SDRAM
- 10d: FPGA
- 10e: DSP
- 10f, 20b: DAC/ADC
- 10g, 20c: frequency converter
- 10h, 20d: RF circuit
- 10i, 20e: antenna
- 20, 30, 40: mobile station
- 20a: system LSI
- 21: receiving unit
- 22: CQI measuring unit
- 23: report determining unit
- 24: CQI data creating unit
- 25: sending unit

## Claims

1. A mobile communication system in which a mobile station reports a channel state to a base station, wherein
the mobile station includes
a first receiving unit that receives allocation information on a radio resource used for a report on the channel state, and
a first sending unit that sends, to the base station, a trigger for the report on the channel state and that sends, to the base station, information on the channel state based on the allocation information, and
the base station includes
a second receiving unit that receives the trigger sent from the mobile station, and
a second sending unit that sends, in response to the received trigger, the allocation information to the mobile station.

2. The mobile communication system according to claim 1, wherein the first sending unit in the mobile station does not send the trigger to the base station for a periodically made report on the channel state but sends the trigger when a report on a channel state is sent instead of sending the periodically made report on the channel state.

3. The mobile communication system according to claim 2, wherein the mobile station further includes a determining unit that determines, based on the moving speed of the mobile station, whether the periodic report on the channel state to the base station is made.

4. The mobile communication system according to claim 3, wherein, when the moving speed of the mobile station is equal to or greater than a predetermined speed, the determining unit in the mobile station makes the periodic report on the channel state to the base station.

5. A mobile station that reports a channel state to a base station, the mobile station comprising:
a sending unit that sends a trigger for a report on the channel state to the base station; and
a receiving unit that receives allocation information on a radio resource used for the report on the channel state, the allocation information being sent from the base station in response to reception of the trigger, wherein
the sending unit sends information on the channel state to the base station based on the allocation information.

6. A base station that receives a report on a channel state from a mobile station, the base station comprising:
a receiving unit that receives a trigger for a report on the channel state sent from the mobile station; and
a sending unit that sends, in response to the received trigger, allocation information on a radio resource used for the report on the channel state to the mobile station.

7. A communication method performed in a mobile communication system in which a mobile station reports a channel state to a base station, the communication method comprising:
sending, by the mobile station, a trigger for a report on the channel state to the base station;
receiving, by the base station, the trigger sent from the mobile station and sending, by the base station to the mobile station in response to the received trigger, allocation information on a radio resource used for the report on the channel state; and
receiving, by the mobile station, the allocation information sent from the base station and sending information on the channel state to the base station based on the allocation information.

8. A communication method performed by a mobile station that reports a channel state to a base station, the communication method comprising:
sending, to the base station, a trigger for a report on the channel state;
receiving allocation information on a radio resource used for the report on the channel state, the allocation information being sent from the base station in response to reception of the trigger; and
sending information on the channel state to the base station based on the allocation information.

9. A communication method performed by a base station that receives a report on a channel state from a mobile station, the communication method comprising:
receiving a trigger for a report on the channel state sent from the mobile station; and
sending, in response to the received trigger, allocation information on a radio resource used for the report on the channel state to the mobile station.

10. A mobile communication system in which a mobile station reports a channel state by using a periodic radio resource allocated by a base station, wherein
the mobile station includes
a first receiving unit that receives allocation information on a radio resource from the base station, and
a first sending unit that sends, to the base station, a trigger for the report on the channel state and that sends, to the base station, information on the channel state based on the allocation information, and
the base station includes
a second receiving unit that receives the trigger sent from the mobile station, and
a second sending unit that sends, to the mobile station in response to the received trigger, allocation information on a radio resource used for a report on a channel state in addition to the periodic radio resource.
